# EUROPEAN PATENT SPECIFICATION

(11) **EP 2 200 357 B1**
(45) Date of publication and mention of the grant of the patent: **13.06.2012**
(21) Application number: 10159251.7
(22) Date of filing: 16.10.2002
(51) Int. Cl.: H04W 12/02

(54) **Method and apparatus for the provision of location information**
Verfahren und Einrichtung zur Bereitstellung von Ortsinformation
Méthode et appareil pour la mise à disposition d'information de localisation

(30) Priority: 17.10.2001 GB 0124956; 30.10.2001 GB 0126008
(43) Date of publication of application: 23.06.2010
(62) Divisional of application: 02801467.8
(73) Proprietor: Nokia Corporation, 02150 Espoo (FI)
(72) Inventor: Kokkonen, Petri, FIN-02230, Espoo (FI); Muhonen, Janne, FIN-00980, Helsinki (FI); Ignatius, Jan, FIN-02170, Espoo (FI); Kraufvelin, Sebastian, FIN-10520, Tenhola (FI)
(74) Representative: Swindell & Pearson Limited

(56) References cited:
- WO-A-02/17656
- WO-A-98/52379
- "3rd Generation Partnership Project; Technical Specification Group Services and System Aspects; Functional stage 2 description of location services in UMTS (Release 1999)", 3GPP STANDARD; 3GPP TS 23.171, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V3.5.0, 1 October 2001 (2001-10-01), pages 1-50, XP050362947,

## Description

### Field of the Invention

The present invention relates to provision of location information by means of a communication system.

### Background of the Invention

Communication systems providing mobility for the users thereof are known. A well known example of the mobile communication systems is the public land line mobile network (PLMN), a cellular communication network being an example of the PLMN. Another example is a mobile communication system that is based, at least partially, on use of communication satellites.

The mobile network apparatus and/or user equipment such as a mobile station can be employed for provision of information regarding the geographical location of the user equipment and thus the user thereof. A mobile user equipment and thus the user thereof can be positioned by various different techniques. For example, substantially accurate geographical location information that associates with a user equipment can be obtained based on the known satellite based GPS (Global Positioning System). More accurate location information can be obtained through a differential GPS.

Another possibility is to use a location service that associates with a cellular telecommunications system for the provision of the location information. In this approach the cells or similar geographically limited radio access entities and associated controllers of the communication system are utilised in production of at least a rough location information estimate concerning the current location of the mobile user equipment. To improve the accuracy of the location information the communication system may be provided with specific location measurement units that provide more accurate data concerning the location of a user equipment within the service area of the cellular system. It is also possible to conclude geographical location when the mobile user equipment is located within the coverage area of a visited or "foreign" network. The visited network may be made capable of transmitting the location of the mobile user equipment back to the home network, e. g. to support services that are based on location information or for the purposes of routing and charging. The production of data for the location determinations does not form an essential element of the present invention, and is thus not described in any greater detail herein.

The location data may be processed in a specific location service entity that is implemented either within the cellular system or connected thereto. The location data may also be processed in the user equipment that is provided with appropriate processing capacity. The location service entity provided by the communication system may serve different clients via an appropriate interface.

The location information may be used for various purposes, such as for location of a mobile telephone that has made an emergency call, for locating vehicles or given mobile subscribers and so on. In general, a client such as a user equipment or another entity wishing to receive location information regarding a user equipment may send a request for such information to the location service provision entity.

The location service provisioning entity will then process the request, obtain the required data and generate an appropriate response.

An example of the provision of the location information by a PLMN is described in more detail 3rd Generation Partnership Project (3GPP) technical specifications, see e. g. 3GPP TS 23.271 version 4.2. 0, titled "Functional stage 2 description of LCS", June 2001.

According to the 3GPP specification a location service (LCS) server entity referred to as a Gateway Mobile Location Center (GMLC) is provided for managing the location services. The GMLC is for gathering and storing various data that may be used in provision of location information for location service clients (LCS clients).

The LCS Client may make use of that location information for various services/applications. A possible application comprises a LCS client arranged to provide location information in response to a request for non-call related location information. Such a request for location information is referred to in the 3GPP specifications as a non-call related MT-LR (Mobile Terminated Location Request).

Use of a so called "Authorized UE List" has been proposed. This list contains Mobile Subscriber ISDN (MSISDN) numbers or groups of MSISDNs which are authorised to initiate a location information provision procedure. That is, MSISDNs or groups of MSISDN are listed for which the LCS Client may issue a non-call related MT-LR. Separate lists of MSISDNs may be associated with each distinct external or non-call related client identity. Location information may be provided by the LCS server to the LCS client in response to a request for location information from a user with a MSISDN number that appears in said list.

The LCS Client who is external to the PLMN system may only be enabled to validly issue location information requests for those MSISDNs which are found. on the "Authorized UE List". That is, the LCS clients request may only be responded for subscribers who subscribe to the location services provided by the PLMN, as their MSISDNs would not otherwise appear on the list.

Request from the LCS Client are authenticated based on a combination of a Client ID and password stored in a LCS Client profile at the LSC server (e. g. the GMLC) and authorized based on the "Authorized UE List". That is, the LCS client is authorised to receive location information from the GMLC entity if the requesting user equipment (UE) is found from the list.

The inventors have found that there is no mechanism for the target mobile user equipment, and more particularly, to the user thereof, to selectively prevent provision of information about their location. The users may not select provision of a certain location service application (or certain applications) and at the same time restrict any such parties that are allowed by the location service system to request for location information regarding any other user equipment.

A simple example of this type of service is the so called "Friends Find" application.

In here a target user cannot control the users who are allowed to receive location information about the target user's location. A request for location information may not be rejected if the LCS client is allowed to receive the location information from the LCS server.

However, the inventors believe that there, is a need for a solution by means of which a user of a target user equipment could select to who are authorised to receive such information and to be able to prevent provision of location information to any unwanted requesters.

Furthermore, LCS clients are typically Application Service Providers (ASP) who are not a part of the PLMN system. Therefore the operator of the PLMN may not be able to control the behaviour of the LCS client. This may cause security concerns among subscribers who have privacy concerns and who would like to restrict the accessibility to location data associated with them.

W098152379 describes a technique for determining the geographic location of a mobile station in a mobile communication system, the technique including an authorization check.

### Summary of the invention

Embodiments of the present invention aim to address one or several of the above problems.

According to one aspect of the present invention, there is provided a method according to claim 1.

According to another aspect of the present invention there is provided an apparatus according to claim 15

According to another aspect of the present invention there is provided a communication system according to claim 17.

According to another aspect of the present invention there is provided a location service server according to claim 18

According to another aspect of the present invention there is provided a user equipment according to claim 19.

In a more specific form the request is generated at a user equipment of the requester and signalled to a location service client entity adapted for provision of location services for the users of the communication system.

Location information associated with the target user may be provided only for requesters who are determined by the target user as being authorised to receive information associated with the location of the target user.

At least a part of information about the authorisations by the target user may be stored in storage means provided in the communication system and/or in a second communication system and/or at the user equipment of the target user.

The verification may comprise verifying if an identifier of the requester can be found from a list of identifiers associated with the target user.

Said identifying information may be signalled to the user equipment of the target user for the authorisation. The identifier information may comprise n unique code or a name. The name may be in the form of a character string. Initiation of provision of location information may then be authorised or denied at the user equipment of the target user in response to receiving said identifying information.

The user of the user equipment may authorise requesters on a case by case. basis.

An identifier may be translated to a format based on which the verification can be performed.

Information about the authorisations by the target user that is stored in storage means may be modified by means of the user equipment of the target user.

The embodiments of the invention may provide a user with a possibility to allow or deny positioning requests from specific requestors. In some embodiments the determination may be done on a case by case basis. Thus the privacy control of individual user may be enhanced. A list of allowed requestors can be implemented in a secure environment, e. g. in a telephone operator's network. The centralised storage of information about the authorised requestors may be used to prevent distributions of this information to several entities, such as to a plurality of Application Service Providers (ASPs). Instead, the information about the authorised requestors may be kept unknown to the ASPs whereby the risk of misuse of this information can be reduced. Functions such as privacy checking and authorisation management may be concentrated into the operator's domain.

### Brief Description of Drawings

For better understanding of the present invention, reference will now be made by way of example to the accompanying drawings in which:
Figure 1 shows an embodiment of the present invention;
Figure 2 is a signaling flowchart in accordance with an embodiment; and
Figure 3 is a signaling flowchart in accordance with another embodiment.

### Description of Preferred Embodiments of the Invention

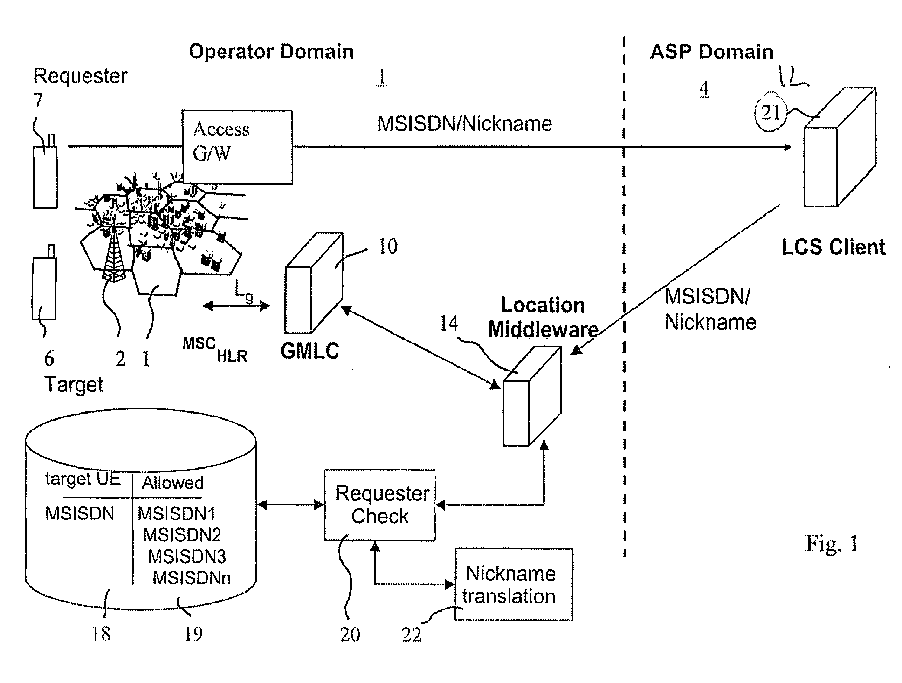

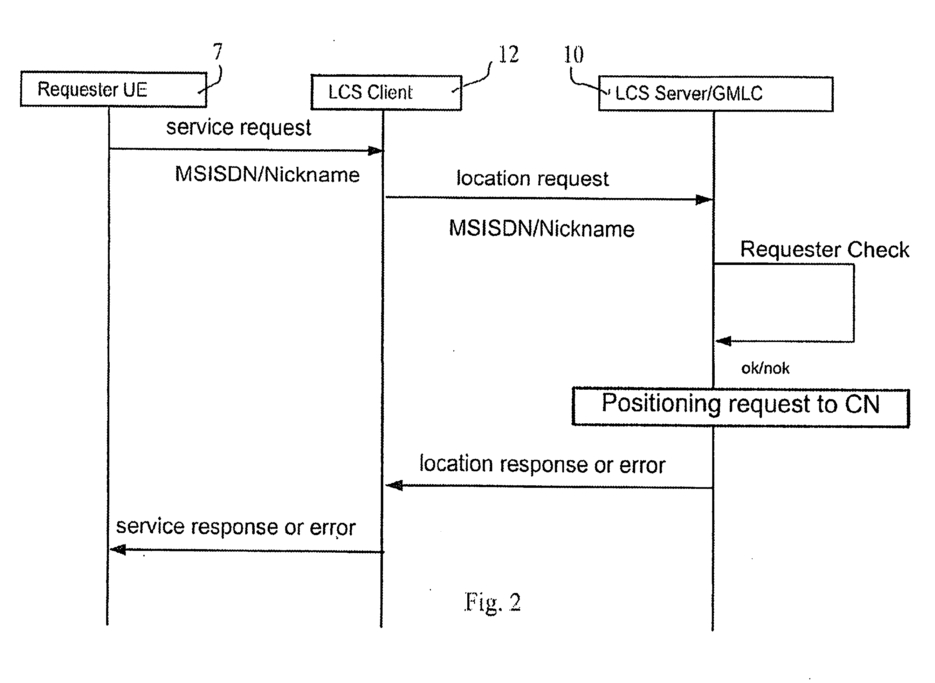

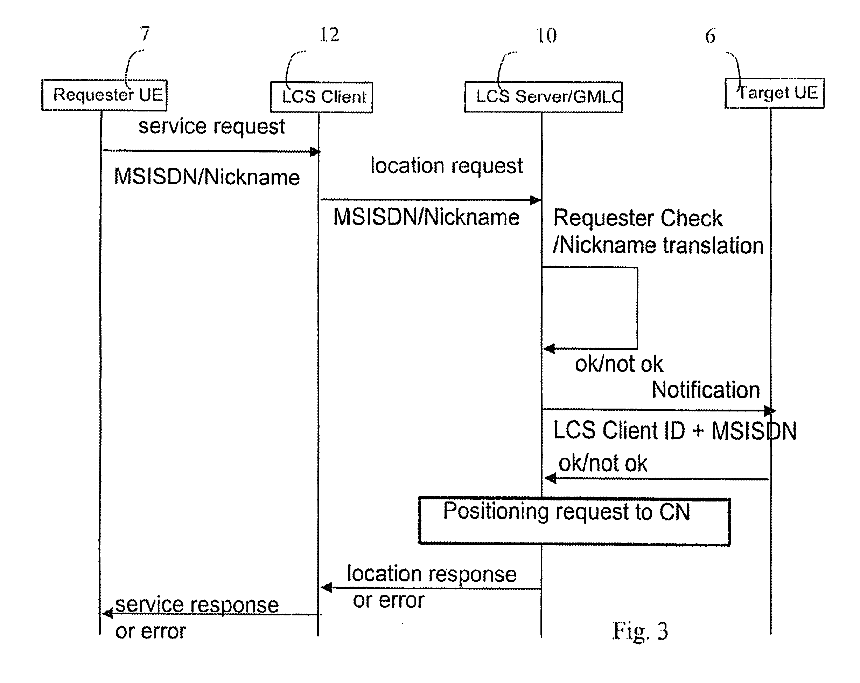

Before explaining possible operation in accordance with the principles of the invention in more detail with reference to Figures 2 and 3, a reference is made to Figure 1 which is a simplified presentation of a cellular system providing location services. It should be appreciated that even though the exemplifying telecommunications network shown and described in more detail uses the terminology of the third generation (3G) UMTS (Universal Mobile Telecommunications System) public land mobile network (PLMN), the proposed solution can be used in any system providing mobile communications for users and some kind of location information service. Examples of other telecommunications systems include, without limiting to these, standards such as the GSM (Global System for Mobile communications) or various GSM based systems (such as GPRS: General Packet Radio Service), AMPS (American Mobile Phone System) or DAMPS (Digital AMPS), IMT 2000 (International Mobile Telecommunications system 2000), i-phone and so on.

More particularly, Figure 1 shows an arrangement in which base stations 3 (only one shown for clarity) of the cellular system 1 provide radio coverage areas i. e. cells 2. Each radio coverage area 2 is typically served by a base station. It should be appreciated that one cell may include more than one base station site. A base station apparatus or site may also provide more than one cell. The shape and size of the cells 2 depend on the implementation and may be different from the illustrated shapes. The shape and size of the cells may also vary from cell to cell. It should be appreciated that in some systems the base station may be referred to as Node B.

Two user equipment such as mobile stations (MS) 6 and 7 are also shown. It shall be appreciated that typically a number of user equipment will be in communication with each base station although only two user equipment 6 and 7 are shown in Figure 1 for clarity. Each base station is arranged-to transmit signals to and receive signals from the mobile user equipment (UE) 6 and 7 via a wireless interface.

Likewise, the user equipment 6 and 7 are able to transmit signals to and receive signals from the base stations.

Each of the base stations is connected to an access network controller such as a radio network controller (RNC) of a UMTS terrestrial radio access network (UTRAN). The radio network controller may be connected to appropriate core network entities of the cellular system, such as a MSC (mobile switching centre) and/or SGSN (serving general packet radio service support node) 11, via a suitable interface arrangement. These, however, do not form an essential element of the invention and are thus not explained in any greater detail.

The location of a mobile user equipment may vary in time as the user equipment is free to move within the coverage area of a base station and also from a coverage area to another coverage area. The modern communication systems are capable of providing information regarding the geographical location of a user equipment within the coverage area thereof. The geographical location may be defined on the basis of the position of the mobile station relative to the base station (s) of the mobile telecommunications network.

The geographical location of the user equipment may be defined, for example, in X and Y co-ordinates or in latitudes and longitudes. A possibility is to use the relation between defined radiuses and angles, e. g. based on the spherical coordinate system or alike. It is also possible to define the location of the base stations and/or mobile stations in vertical directions. For example, Z co-ordinate may be used when providing the location information in the vertical direction. The vertical location may be needed e. g. in mountainous environments or in cities with tall buildings.

In Figure 1 the location service (LCS) functionality of the communication system is provided by a Gateway Mobile Location Center (GMLC) entity 10. The GMLC location service node 10 is for gathering and storing data that is required for the provision of the location information. The location service node 10 is arranged to receive via appropriate interface means information concerning the location of the mobile user equipment from the cellular system.

The cellular system may be provided with various different means for processing information gathered from the cells and/or some other parameters and/or for computing by processor means appropriate calculations for determining and outputting the geographical location of the target user equipment. The location information may be obtained by using one or more of the appropriate location techniques. At least a part of the location information may be provided based on information provided by system that is separate from the communication system, such as by means of the Global Positioning System (GPS) or similar. Since there are various possibilities how to implement the location services in the cellular system and since the invention is not dependent on the used location determination technology, these are not be described in any greater detail herein.

In order to be able to separate the user equipment from each other, the locations service entity 10 is capable of processing at lest one form of identifiers. The identity information may be provided e. g. by means of a mobile subscriber ISDN number (MSISDN), an international mobile subscriber identifier (IMSI) or a temporary identifier (such as a temporary international mobile subscriber identifier: TIMSI) of the mobile user equipment, passwords, or any other form of identifier that can be reliably used for identifying a user equipment and/or a user.

The location service node may be implemented in the core network by means of a LCS server entity 10. The LCS server 10 is arranged to receive location information from the radio access network via appropriate controller entities such as the MSC and/or SGSN connected by the appropriate interface means to the access network.

This location service node may provide the location information in a predefined manner to a location services (LCS) client 12. A LCS Client 12 can be any entity that makes use of the location information. The LCS client 12 can be seen as a logical functional entity that may make a request to the location service entity 10 for the location information of one or more target user equipment.

As shown by Figure 1, the LCS client 12 may be an entity that is external to the communication network 1, the client entity 12 being provided in an ASP domain 4.

The LCS client may also be an internal client (ILCS) i. e. reside in any entity or node (including the mobile station) within the communication system 1.

The LCS clients are entitled to receive at least some degree of information concerning the location (or location history) of a target user equipment. The particular requirements and characteristics of a LCS Client are typically known to the location service server of the communication system by its LCS client subscription profile. As will be described in more detail below, particular restrictions associated with each target user equipment may also be defined.

The location service server 10 may consist of components and bearers needed to serve the LCS client 12. The server 10 may provide a platform which will enable the support of location based services in parallel with other telecommunication services such as speech, data, messaging, other teleservices, user applications and supplementary services. The LCS Server 10 may thus provide the client 12, on request or periodically, the current or most recent geographic location (if available) of the target user equipment or, if the location fails, an error indication and optionally the reason for the failure. A more detailed description of a LCS entity that may be employed in the embodiments of can be found e. g. from the above referenced 3GPP technical specification No. 3GPP TS23.271.

In Figure 1 the LCS client 12 forms an entity that is capable of providing on request information concerning the geographical location of a target user equipment 6.

Such location information may be requested by clients such as the user equipment 7 (the requester). However, as explained in more detail below, the arrangement is such that a response is provided only to those location requests that originate from a properly authorised clients of the LCS client 12. The provision may be initiated only if requirements regarding the privacy of the target user equipment 6 are satisfied.

In accordance with an embodiment a separate network entity is provided for the purposes of verifying if a requestor is entitled to received location information regarding a specific target user equipment. The parties of the location request (i. e. the requestor and the target) may be identified based on appropriate identifiers. A possible identifier may be based on a Mobile Subscriber ISDN (MSISDN) number that is unique for each mobile subscriber.

In Figure 1 the verification function is provided by a network server entity 14 referred to as a Location Middleware. The server entity 14 is provided in the core network side of the communication system 1. The Location Middleware server entity 14 is for handling the requests received from the LCS client application 12 and for deciding how to proceed with the requests. The server 14 has advanced control function to send the request to different types of location servers (e. g. the GMLC node 10).

This server entity 14 may also provide control of features such as Subscriber Privacy, Subscriber Authentication, System Control and System Operations functions. The Location Middleware server allows service level separation to ensure privacy of the subscribers and to enable verification of the service requestors.

The server entity 14 is shown to comprise a database 18 for storing a list 19 wherein target user equipment identities and allowed user equipment identities are associated to each other. That is, the database 18 provided a link between the target user equipment 6 (and this the user thereof) and any user equipment that is allowed by the user of the target user equipment to receive location information concerning the target user equipment 6.

The target user equipment 6 may be provided with a user interface and other necessary means for modifying the list restrictions. For example, the target user equipment may be arranged to display a menu for the user by means of which the user may add a name or user equipment identifier to the list 19 or remove a name or user equipment identifier from the list 19. According to a possibility the list can be managed by accessing a management document in a web server.

The server is also shown to include a requester check function 20. A nickname translation function 22 is shown to be associated with the check function 20.

Example of the operation of these entities will be described in the following with reference to Figures 2 and 3.

It shall be appreciated that the separate verification server 14 is not a necessity. At least a part of the functions of the server entity 14 may be provided by the location service entity 10. For example, the functionality of checking if the "Requester" is authorised or not may be provided by mean of the GMLC holding also the "Authorized UE List" discussed above. Therefore the Location Middleware of the Figure 1 embodiment may also be seen as a logical functionality that is not tied to any physical element of the network.

In accordance with an embodiment shown in Figure 2 the originator of a request i.e. the requestor user equipment 7 signals a service request for information regarding the location of the target user equipment 6. An identifier parameter is added in an appropriate element of the request, the request thus containing an identifier such as the MSISDN or a nickname of the requestor.

The identifier parameter identifying the requester is passed to the location service entity 10 form the LCS client 12. Based on the identity information the requester may be checked by the check function 20 against the list 19 of authorised requestors in the database 18. If the identifier is among the authorised identities which are allowed to receive information regarding the target user equipment determinations regarding the location of the target user equipment are allowed to proceed and a response is generated. If not, the request is denied and an appropriate procedure follows. For example, an error message, or request denied message may be sent to the LCS client.

If a nickname or similar is used, the nickname translation function 22 may be needed to translate the identifier into a form that can be verified against the list 19 stored in the database 18.

The identifier may be added to all location requests between a LCS Client 12 and a LCS Server entity 10, such as the GMLC. The identifier may be added to the request by the requesting user equipment 7 or by the LCS client 12.

Capacity to carry the identifier parameter may be added to a protocol defining the so called Le interface between the GMLC 10 and a location server client entity 12.

The current Le interface is described more detail e. g. in the above referenced 3GPP Technical Specification 23.271.

Figure 3 shows another embodiment wherein a target user equipment 6 is enabled to authorise the provision of the location information in case-by-case basis. In here a message containing information about the identity of the requester may be sent to the target user equipment 6. A LCS Client ID may also be included in this message for added privacy. The target user may then allow or deny a positioning request on case by case basis.

Identifier such as the MSISDN or similar unique identifier may be forwarded to the target user equipment 6 as a part of a LCS Client notification message. A possibility is to associate the identifier information with the name of the requester at the target user equipment. The identifier information may for example be directed to the phone book of the target user equipment 6 so that the MSISDN is translated into a name based on a phone book entry. Now the user has the possibility to allow or deny the positioning request based on actual requestor information.

Said Information about the requester may also comprise the name or nickname of the requester. The name may be included into the message to the target user equipment either instead or in addition to other identifiers, such as the MSISDN.

The target user equipment 6 may then display the name directly as indicated by the message.

A specific client name parameter referred to as 'client name' may be added to the message. The client name parameters as such is known from other applications, and has been proposed to be used in various standards. It is therefore not explained in any great detail herein. It is sufficient to note that the client name parameter may consists of a text string. For example, GSM release 98 defines a client name parameter capable of containing a text string of the maximum length of 63 characters. Since substantially long character strings are possible, the client name parameter may include both the name or the requester and the name of the LCS client.

The parameter including the name of the requester is preferably included into the message by the LCS client 12. The parameter may then be transported via the so called Le interface between the LCS client 12 and the LCS server 10. The parameter may then be transported via the so called Lg interface between the LCS server 10 and the radio network of the communication system serving the target user equipment and further to the target user equipment 6.

According to a possibility the name/nickname is already inserted in the request at the requester user equipment 7. The requester user equipment may accomplish this automatically, or the user thereof may input his name. For added security, the LCS client 12 or any other appropriate entity at the network may verify the name.

The target user equipment may prompt the user and ask form his/hers confirmation whether the request should be approved or not. According to a possibility the user equipment responds automatically based on information regarding authorised/nonauthorised requestors stored in the database thereof.

In the Figure 3 embodiment a verification is not necessarily needed at the network.

Instead, the identity of the requester may be added to a notification sent to the target user equipment 6 and the authorisation may be done at the target user equipment. However, a verification based e. g. on the list 19 of Figure 1 may still be used in here e. g. for improved safety thereby providing a double check feature. The target user may also wish to receive the notifications e. g. only on certain times while at the rest of the times he/she may wish to rely on the authorisation list.

The processing of the requests and authorisations may need addition of a notification processing capability at the target user equipment 6. However, this is an implementation issue, and may be accomplished by mean of the existing processor and data processing hardware of the user equipment, and will thus not be discussed any more detail herein.

In the above the identifier was described as being on the Mobile Subscriber ISDN (MSISDN) number of the user. Other possibilities for the unique identifier include the IMSI, TIMSI, password, and so on. In principle the identifier may be any anything as long as it can be processed by the PLMN system so that the verification can be made based on it.

Responses by the LCS client 12 to location information requests may have the form of simple coordinate (x, y) information or contain more value added services like a reverse-geocoded response provided with a street name or a map reference.

The response may even comprise a map and a pointer on the map.

For Emergency and Lawful intercept location services this parameter may not be needed depending on local legislation. The authorisation function may be overrode e. g. if the request comes from an emergency service.

It should be appreciated that the elements of the location service functionality may be implemented anywhere in the telecommunications system. The location service implementation may also be distributed between several elements of the system.

Furthermore, although the above describes embodiments employing a specific LCS client node, this is not a necessity. The request for location information may be addressed directly to a location service entity of the communication system, such as to the GMLC or any other element associated with the provision of location information. If a LCS client is used, it does not need to be an external element, but may also be implemented within the communication network and/or be run the by the operator of the network.

According to an embodiment the target user equipment 6 itself provides at least part of the information required by the LSC client, that is at least a part of the information is provided directly by the target user equipment instead of e. g. the GMLC. The user equipment 6 may be provided with the location service processing function and is capable of generating and transporting location information thereof to the clients via the core network and/or the LSC server.

According to an embodiment a plurality of target user equipment is grouped into one or more "location service groups", each of these groups being provided with an unique identifier that may then be used for preventing unauthorised provision of location information regarding any member of the group. The group may consist of subscribers that are of a predefined type, such as personnel of an organisation, members of a family or any other group of users that may be grouped together based on an appropriate criteria and may have similar needs regarding the selective prevention of location information provision.

It should be appreciated that whilst embodiments of the present invention have been described in relation to user equipment such as mobile stations, embodiments of the present invention are applicable to any other suitable type of user equipment.

The embodiment of the present invention has-been described in the context of a third generation communication system. This invention is also applicable to any other communication system.

According to at least some embodiments of the invention there is provided a method in a communication system, the method comprising: signaling a request for location information associated with a target user, said request containing information identifying the requestor of said location information; verifying based on said identifying information if the target user has authorised the requester to initiate provision of location information that associates with the target user; and if the requester is authorised by the target user to initiate provision of location information that associates with the target user, initiating the provision of said location information.

The request may be generated at a user equipment of the requester and signalled to a location service client entity adapted for provision of location services for the users of the communication system.

Location information associated with the target user may be provided only for requesters who are determined by the target user as being authorised to receive information associated with the location of the target user.

At least a part of information about the authorisations by the target user may be stored in storage means provided in the communication system.

At least a part of information about the authorisations by the target user is fetched from a second communication system, said second communication system being accessible for the entities of the communication system wherein the verification is performed.

A verification entity of the communication system accomplished the verification based on said stored information and identifying information.

The verification may comprise verifying if an identifier of the requester can be found from a list of identifiers associated with the target user.

The method may comprise signaling of said identifying information to the user equipment of the target user for the authorisation. Initiation of provision of location information may be authorised or denied at the user equipment of the target user in response to receiving said identifying information. Information about the authorisations by the target user may be stored in storage means provided at the user equipment of the target user, and the user equipment may verify based on the received information if the storage means of the user equipment contains an authorisation for the requester. The identifying information may comprise the name or nickname of the requester. The name or nickname may be contained in a client information parameter.

The identifying information may be included into a message requesting for location information by said location service client entity.

The user of the user equipment may authorise the requester on a case by case basis.

The method may comprise translation of an identifier to a format based on which the verification can be performed.

The location information may be provided by means of a location service entity of the communication system, and the requester signals with a client entity of the location service entity, said client entity being an entity external to the communication system.

The method may comprise modifying information about the authorisations by the target user that is stored in storage means by means of the user equipment of the target user.

According to at least some embodiments of the invention there is provided a communication system comprising: a location information provision entity; communication media for signaling from a client entity to the location information provision entity a request for location information associated with a target user, said request containing information identifying the requester of said location information; and verification means for verifying based on said identifying information if the target user has authorised the requester, wherein provision of location information that associates with the target user can be initiated only if such authorisation is given.

According to at least some embodiments of the invention there is provided a location service server for use in a communication system, the location service server being arranged to receive a request for location information associated with a target user, said request containing information identifying the requester of said location information and to verify based on said identifying information if the target user has authorised the requester, whereby the location service server authorises provision of location information that associates with the target user only for requesters authorised the by the target user.

According to at least some embodiments of the invention there is provided a user equipment for communication via a communication system, the user equipment being arranged to receive and process messages that associate with provision of information about the location of the user equipment, and to authorise provision of such information.

The user equipment may comprise a user interface arranged to enable the user to authorise or deny requests for location information and/or for modifying information regarding authorisations stored in a storage means.

It is also noted herein that while the above describes exemplifying embodiments of the invention, there are several variations and modifications which may be made to the disclosed solution without departing from the scope of the present invention as defined in the appended claims.

## Claims

1. A method comprising:
receiving a request for location information associated with a target (6) In a communication system, said request containing Information identifying a requestor of said location information;
determining whether the request satisfies one of one or more predefined conditions, wherein one of the one or more predefined conditions is satisfied by a verification, based on said identifying information, that the target (6) has authorised the requester to initiate provision of location information that associates with the target (6); and
if it is determined that the request satisfies one of the one or more predefined conditions, sending said request to a location service server (10) to initiate the provision of said location information.

2. A method as claimed in claim 1, wherein at least part of the information about authorizations by the target (6) is stored in a separate network entity provided in the communication system.

3. A method as claimed in claim 1 or 2, comprising signaling a request for location information associated with a target (6), to a location middleware server entity (14), and wherein said initiating the provision of said location information comprises sending said request from said middleware server entity (14) to a location service server entity (10) and wherein the request is signaled to said location middleware server entity (14) other than via said location server entity (10).

4. A method as claimed in any preceding claim, wherein the request is generated at a user equipment of the requester and signalled to a location service client entity adapted for provision of location services for the users of the communication system.

5. A method as claimed in any preceding claim, wherein location information associated with the target (6) is provided only for requesters who are determined by the target (6) as being authorised to receive information associated with the location of the target (6).

6. A method as claimed in any preceding claim, wherein at least a part of information about the authorisations by the target (6) is fetched from a second communication system, said second communication system being accessible for the entities of the communication system wherein the verification is performed.

7. A method as claimed in claim 1, comprising sending said location information to the requestor of said location information.

8. A method as claimed in any preceding claim, comprising signaling of said identifying information to the user equipment of the target (6) for the authorisation.

9. A method as claimed in claim 8, wherein initiation of provision of location information is authorised or denied at the user equipment of the target (6) in response to receiving said identifying information and wherein information about the authorisations by the target (6) is stored in storage means provided at the user equipment of the target (6), and wherein the user equipment verifies based on the received information if the storage means of the user equipment contains an authorisation for the requester.

10. A method as claimed in claim 8 or 9, wherein the identifying information is included into a message requesting for location information by said location service client entity and wherein the user of the user equipment authorises the requester on a case by case basis.

11. A method as claimed in any preceding claim, wherein the location Information is provided by means of a location service entity of the communication system, and the requester signals with a client entity of the location service entity, said client entity being an entity external to the communication system.

12. A method as claimed in any preceding claim, comprising modifying information about the authorisations by the target (6) that is stored in storage means by means of the user equipment of the target (6).

13. A method as claimed in claim 1, wherein one of one or more predefined conditions is an override condition.

14. A method as claimed in claim 13, wherein the override condition is satisfied if the request is for emergency or for lawful intercept.

15. An apparatus, comprising:
means for receiving a request for location information associated with a target (6) in a communication system, said request containing information identifying a requestor of said location information;
means for determining whether the request satisfies one of one or more predefined conditions, wherein one of the one or more predefined conditions is satisfied by a verification based on said identifying information that the target (6) has authorised the requester to initiate provision of location information that associates with the target (6); and
means for sending, if it is determined that the request satisfies one of the one or more predefined conditions, said request to a location service server (10) to initiate the provision of said location information.

16. An apparatus as claimed in claim 15 or a system comprising the apparatus of claim 15, further comprising means for performing the method of any of claim 2 to 14.

17. A communication system comprising:
a location service server (10) for gathering and storing data required for providing location information;
a location middleware server (14) comprising an apparatus according to any of claims 15 or 16; and
communication media for signaling from a location service client entity to the location middleware server (14) a request for location information associated with a target (6), said request containing information identifying the requester of said location information,
wherein said request for location information that associates with the target (6) is sent from said location middleware entity (14) to said location service server entity (10) to initiate provision of location information that associates with the target (6) only if such one of the one or more predefined conditions is satisfied.

18. A location service server (10) for use in a communication system according to claim 17, the location service server (10) being arranged to receive a request for location information associated with a target (6), said request containing information identifying the requester of said location information and to verify based on said identifying information if the target user has authorised the requester, whereby the location service server authorises provision of location information that associates with the target user only for requesters authorised the by the target user.

19. A user equipment for use in a communication system according to claim 17, the user equipment being arranged to signal a request for location information associated with a target (6), via the location service client entity, to the location middleware server (14).

## Patentansprüche

1. Verfahren, umfassend:
Empfangen einer Anforderung von Ortsinformationen, die mit einem Ziel (6) in einem Kommunikationssystem verknüpft sind, wobei die Anforderung Informationen enthält, die einen Anforderer der Ortsinformationen identifizieren;
Bestimmen, ob die Anforderung eine von einer oder mehreren vorbestimmten Bedingungen erfüllt, wobei eine der einen oder mehreren vorbestimmten Bedingungen durch eine Verifizierung erfüllt wird, die auf den identifizierenden Informationen basiert, dass das Ziel (6) den Anforderer autorisiert hat, ein Bereitstellen von Ortsinformationen zu initiieren, die mit dem Ziel (6) verknüpft sind; und
falls bestimmt wird, dass die Anforderung eine von einer oder mehreren vorbestimmten Bedingungen erfüllt, Senden der Anforderung an einen Ortsdienst-Server (10), um die Bereitstellung der Ortsinformationen zu initiieren.

2. Verfahren gemäß Anspruch 1, wobei mindestens ein Teil der Informationen über Autorisierungen durch das Ziel (6) in einer getrennten Netzwerkeinheit gespeichert wird, die in dem Kommunikationssystem bereitgestellt ist.

3. Verfahren gemäß Anspruch 1 oder 2, umfassend
Signalisieren einer Anforderung von Ortsinformationen, die mit einem Ziel (6) verknüpft sind, an eine Orts-Middleware-Servereinheit (14); und
wobei das Initiieren des Bereitstellens der Ortsinformationen ein Senden der Anforderung von der Middleware-Servereinheit (14) an eine Ortsdienst-Servereinheit (10) umfasst, und wobei die Anforderung anders als über die Ortsdienst-Servereinheit (10) an die Orts-Middleware-Servereinheit (14) signalisiert wird.

4. Verfahren gemäß einem der vorstehenden Ansprüche, wobei die Anforderung an einem Benutzergerät des Anforderers erzeugt wird und an eine Ortsdienst-Clienteinheit signalisiert wird, die angepasst ist, um den Benutzern des Kommunikationssystems Ortsdienste bereitzustellen.

5. Verfahren gemäß einem der vorstehenden Ansprüche, wobei Ortsinformationen, die mit dem Ziel (6) verknüpft sind, nur Anforderern bereitgestellt werden, die von dem Ziel (6) als autorisiert bestimmt wurden, Informationen zu empfangen, die mit dem Ort des Ziels (6) verknüpft sind.

6. Verfahren gemäß einem der vorstehenden Ansprüche, wobei mindestens ein Teil der Information über die Autorisierungen durch das Ziel (6) von einem zweiten Kommunikationssystem abgerufen wird, wobei die Einheiten des Kommunikationssystems, worin die Verifizierung ausgeführt wird, auf das zweite Kommunikationssystem zugreifen können.

7. Verfahren gemäß Anspruch 1, umfassend
Senden der Ortsinformationen an den Anforderer der Ortsinformationen.

8. Verfahren gemäß einem der vorstehenden Ansprüche, umfassend Signalisieren der identifizierenden Informationen an das Benutzergerät des Ziels (6) für die Autorisierung.

9. Verfahren gemäß Anspruch 8, wobei das Initiieren des Bereitstellens von Ortsinformationen an dem Benutzergerät des Ziels (6) in Reaktion auf das Empfangen der identifizierenden Informationen autorisiert oder abgelehnt wird, und wobei Informationen über die Autorisierungen durch das Ziel (6) in einem Speichermittel gespeichert werden, die an dem Benutzergerät des Ziels (6) bereitgestellt sind, und wobei das Benutzergerät auf der Grundlage der empfangenen Informationen verifiziert, ob das Speichermittel des Benutzergeräts eine Autorisierung für den Anforderer enthält.

10. Verfahren gemäß Anspruch 8 oder 9, wobei die identifizierenden Informationen in eine Nachricht eingefügt werden, die Ortsinformationen von der Ortsdienst-Clienteinheit anfordert, und wobei der Benutzer des Benutzergeräts den Anforderer von Fall zu Fall autorisiert.

11. Verfahren gemäß einem der vorstehenden Ansprüche, wobei die Ortsinformationen mittels einer Ortsdienst-Einheit des Kommunikationssystems bereitgestellt werden, und wobei der Anforderer mit einer Clienteinheit der Ortsdienst-Einheit signalisiert, wobei die Clienteinheit eine gegenüber dem Kommunikationssystem externe Einheit ist.

12. Verfahren gemäß einem der vorstehenden Ansprüche, umfassend Modifizieren von Informationen über die Autorisierungen durch das Ziel (6), die in dem Speichermittel gespeichert sind, mittels des Benutzergerätes des Ziels (6).

13. Verfahren gemäß Anspruch 1, wobei eine der einen oder mehreren vorbestimmten Bedingungen eine Übergehungsbedingung ist.

14. Verfahren gemäß Anspruch 13, wobei die Übergehungsbedingung erfüllt ist, falls die Anforderung für einen Notfall oder ein rechtmäßiges Abfangen dient.

15. Vorrichtung, umfassend:
Mittel zum Empfangen einer Anforderung von Ortsinformationen, die mit einem Ziel (6) in einem Kommunikationssystem verknüpft sind, wobei die Anforderung Informationen enthält, die einen Anforderer der Ortsinformationen identifizieren;
Mittel zum Bestimmen, ob die Anforderung eine von einer oder mehreren vorbestimmten Bedingungen erfüllt, wobei eine der einen oder mehreren vorbestimmten Bedingungen durch eine Verifizierung erfüllt wird, die auf den identifizierenden Informationen basiert, dass das Ziel (6) den Anforderer autorisiert hat, ein Bereitstellen von Ortsinformationen zu initiieren, die mit dem Ziel (6) verknüpft sind, und
Mittel zum Senden der Anforderung an einen Ortsdienst-Server (10), um die Bereitstellung der Ortsinformationen zu initiieren, falls bestimmt wurde, dass die Anforderung eine der einen oder mehreren vorbestimmten Bedingungen erfüllt.

16. Vorrichtung gemäß Anspruch 15 oder ein System, umfassend die Vorrichtung von Anspruch 15, weiter umfassend Mittel zum Ausführen des Verfahrens gemäß einem der Ansprüche 2 bis 14.

17. Kommunikationssystem, umfassend:
einen Ortsdienst-Server (10) zum Sammeln und Speichern von Daten, die zum Bereitstellen von Ortsinformationen benötigt werden;
einen Orts-Middleware-Server (14), umfassend eine Vorrichtung gemäß einem der Ansprüche 15 oder 16; und
Kommunikationsmedien zum Signalisieren einer Anforderung von Ortsinformationen,
die mit einem Ziel (6) verknüpft sind, von einer Ortsdienst-Clienteinheit an den Orts-Middleware-Server (14), wobei die Anforderung Informationen enthält, die den Anforderer der Ortsinformationen identifizieren;
wobei die Anforderung von Ortsinformationen, die mit dem Ziel (6) verknüpft sind,
von der Orts-Middleware-Servereinheit (14) an die Ortsdienst-Servereinheit (10) gesendet wird, um das Bereitstellen von Ortsinformationen, die mit dem Ziel (6) verknüpft sind, nur zu initiieren, falls eine der einen oder mehreren vorbestimmten Bedingungen erfüllt ist.

18. Ortsdienst-Server (10) zur Verwendung in einem Kommunikationssystem gemäß Anspruch 17,
wobei der Ortsdienst-Server (10) eingerichtet ist, um eine Anforderung von Ortsinformationen zu empfangen, die mit einem (6) verknüpft sind, wobei die Anforderung Informationen enthalten, die den Anforderer der Ortsinformationen identifizieren, und um basierend auf den identifizierenden Informationen zu verifizieren, ob der Zielbenutzer den Anforderer autorisiert hat, wobei der Ortsdienst-Server die Bereitstellung von Ortsinformationen, die mit dem Zielbenutzer verknüpft sind, nur für Anforderer autorisiert, die durch den Zielbenutzer autorisiert sind.

19. Benutzergerät zur Verwendung in einem Kommunikationssystem gemäß Anspruch 17, wobei das Benutzergerät eingerichtet ist, eine Anforderung von Ortsinformationen, die mit einem Ziel (6) verknüpft sind, über die Ortsdienst-Clienteinheit an den Orts-Middleware-Server (14) zu signalisieren.

## Revendications

1. Procédé comprenant les étapes ci-dessous consistant à :
recevoir une demande concernant des informations de localisation associées à une cible (6) dans un système de communication, ladite demande contenant des informations identifiant un demandeur desdites informations de localisation ;
déterminer si la demande satisfait une condition parmi une ou plusieurs conditions prédéfinies, dans lequel une condition parmi lesdites une ou plusieurs conditions prédéfinies est satisfaite lorsqu'il est vérifié, sur la base desdites informations d'identification, que la cible (6) a autorisé le demandeur à initier la fourniture d'informations de localisation qui sont associées à la cible (6) ; et
s'il est déterminé que la demande satisfait une condition parmi lesdites une ou plusieurs conditions prédéfinies, envoyer ladite demande à un serveur de service de localisation (10) en vue d'initier la fourniture desdites informations de localisation.

2. Procédé selon la revendication 1, dans lequel au moins une partie des informations concernant les autorisations émises par la cible (6) est stockée dans une entité de réseau distincte prévue dans le système de communication.

3. Procédé selon la revendication 1 ou 2, comprenant l'étape consistant à signaler une demande d'informations de localisation associées à une cible (6), à une entité de serveur de logiciel intermédiaire de localisation (14), et dans lequel ladite étape consistant à initier la fourniture desdites informations de localisation comprend l'étape consistant à envoyer ladite demande, de ladite entité de serveur de logiciel intermédiaire (14) à une entité de serveur de service de localisation (10), et dans lequel la demande est signalée à ladite entité de serveur de logiciel intermédiaire de localisation (14) autrement que par l'intermédiaire de ladite entité de serveur de localisation (10).

4. Procédé selon l'une quelconque des revendications précédentes, dans lequel la demande est générée au niveau d'un équipement utilisateur du demandeur, et est signalée à une entité de système client de service de localisation apte à fournir des services de localisation aux utilisateurs du système de communication.

5. Procédé selon l'une quelconque des revendications précédentes, dans lequel des informations de localisation associées à la cible (6) sont fournies uniquement pour les demandeurs qui sont désignés par la cible (6) comme étant autorisés à recevoir les informations associées à la localisation de la cible (6).

6. Procédé selon l'une quelconque des revendications précédentes, dans lequel au moins une partie des informations concernant les autorisations émises par la cible (6) est récupérée à partir d'un second système de communication, ledit second système de communication étant accessible pour les entités du système de communication dans lequel la vérification est mise en oeuvre.

7. Procédé selon la revendication 1, comprenant l'étape consistant à envoyer lesdites informations de localisation au demandeur desdites informations de localisation.

8. Procédé selon l'une quelconque des revendications précédentes, comprenant l'étape consistant à signaler lesdites informations d'identification à l'équipement utilisateur de la cible (6) en vue de l'autorisation.

9. Procédé selon la revendication 8, dans lequel l'initiation de la fourniture d'informations de localisation est autorisée ou refusée au niveau de l'équipement utilisateur de la cible (6), en réponse à la réception desdites informations d'identification, et dans lequel des informations concernant les autorisations émises par la cible (6) sont stockées dans un moyen de stockage prévu au niveau de l'équipement utilisateur de la cible (6), et dans lequel l'équipement utilisateur vérifie, sur la base des informations reçues, si le moyen de stockage de l'équipement utilisateur contient une autorisation pour le demandeur.

10. Procédé selon la revendication 8 ou 9, dans lequel les informations d'identification sont incluses dans un message demandant des informations de localisation, par ladite entité de système client de service de localisation, et dans lequel l'utilisateur de l'équipement utilisateur autorise le demandeur au cas par cas.

11. Procédé selon l'une quelconque des revendications précédentes, dans lequel les informations de localisation sont fournies au moyen d'une entité de service de localisation du système de communication, et dans lequel le demandeur effectue la signalisation au moyen d'une entité de système client de l'entité de service de localisation, ladite entité de système client étant une entité externe au système de communication.

12. Procédé selon l'une quelconque des revendications précédentes, comprenant l'étape consistant à modifier des informations concernant les autorisations émises par la cible (6), lesquelles sont stockées dans un moyen de stockage au moyen de l'équipement utilisateur de la cible (6).

13. Procédé selon la revendication 1, dans lequel une condition parmi lesdites une ou plusieurs conditions prédéfinies est une condition dérogatoire.

14. Procédé selon la revendication 13, dans lequel la condition dérogatoire est satisfait si la demande concerne un cas d'urgence ou une interception licite.

15. Dispositif, comprenant :
un moyen pour recevoir une demande concernant des informations de localisation associées à une cible (6) dans un système de communication, ladite demande contenant des informations identifiant un demandeur desdites informations de localisation ;
un moyen pour déterminer si la demande satisfait une condition parmi une ou plusieurs conditions prédéfinies, dans lequel une condition parmi lesdites une ou plusieurs conditions prédéfinies est satisfaite lorsqu'il est vérifié, sur la base desdites informations d'identification, que la cible (6) a autorisé le demandeur à initier la fourniture d'informations de localisation qui sont associées à la cible (6) ; et
un moyen, s'il est déterminé que la demande satisfait une condition parmi lesdites une ou plusieurs conditions prédéfinies, pour envoyer ladite demande à un serveur de service de localisation (10) en vue d'initier la fourniture desdites informations de localisation.

16. Dispositif selon la revendication 15 ou système comprenant le dispositif selon la revendication 15, comprenant en outre un moyen pour mettre en oeuvre le procédé selon l'une quelconque des revendications 2 à 14.

17. Système de communication comprenant :
un serveur de service de localisation (10) destiné à collecter et à stocker des données requises en vue de fournir des informations de localisation ;
un serveur de logiciel intermédiaire de localisation (14) comprenant un dispositif selon l'une quelconque des revendications 15 ou 16 ; et
un support de communication pour signaler, à partir d'une entité de système client de service de localisation, au serveur de logiciel intermédiaire de localisation (14), une demande concernant des informations de localisation associées à une cible (6), ladite demande contenant des informations identifiant le demandeur desdites informations de localisation ;
dans lequel ladite demande concernant des informations de localisation qui sont associées à la cible (6) est envoyée de ladite entité de logiciel intermédiaire de localisation (14) à ladite entité de serveur de service de localisation (10), en vue d'initier la fourniture d'informations de localisation qui sont associées à la cible (6) uniquement si une condition parmi lesdites une ou plusieurs conditions prédéfinies est satisfaite.

18. Serveur de service de localisation (10) destiné à être utilisé dans un système de communication selon la revendication 17, le serveur de service de localisation (10) étant agencé de manière à recevoir une demande concernant des informations de localisation associées à une cible (6), ladite demande contenant des informations identifiant le demandeur desdites informations de localisation, et à vérifier, sur la base desdites informations d'identification, si l'utilisateur cible a autorisé le demandeur, moyennant quoi le serveur de service de localisation autorise la fourniture d'informations de localisation qui sont associées à l'utilisateur cible uniquement pour les demandeurs autorisés par l'utilisateur cible.

19. Equipement utilisateur destiné à une utilisation dans un système de communication selon la revendication 17, l'équipement utilisateur étant agencé pour signaler une demande pour des informations de localisation associées à une cible (6), par l'intermédiaire de l'entité de système client de service de localisation, au serveur de logiciel intermédiaire de localisation (14).
